# EUROPEAN PATENT APPLICATION

(11) **EP 4 478 500 A1**
(43) Date of publication of application: **18.12.2024**
(21) Application number: 23736588.7
(22) Date of filing: 25.05.2023
(51) Int. Cl.: H01M 50/188

(54) **BATTERY HOUSING ASSEMBLY AND LITHIUM ION BATTERY**

(30) Priority: 24.04.2023 CN 202320949101 U
(71) Applicant: Eve Power Co., Ltd., Jingmen, Hubei 448000 (CN)
(72) Inventor: XIAO, Tianli, Hubei 448000 (CN); LI, Shangyi, Hubei 448000 (CN); CHEN, Wen, Hubei 448000 (CN)
(74) Representative: Murgitroyd & Company
(86) International application number: PCT/CN2023/096253
(87) International publication number: WO 2024/221526

(57) **Abstract**

The present disclosure provide a battery shell assembly and a lithium-ion battery. The battery shell assembly includes a shell, a pole and an insulating assembly. The shell is formed with an accommodating cavity and has a first end and a second end that are opposite to each other. The pole is disposed at the first end and is insulatively connected to the shell. The insulating assembly is connected between the pole and the shell. The shell has a first surface opposite to the pole, the pole has a second surface opposite to the shell, and at least one of the first surface and the second surface is disposed with an insulating layer.

## Description

The present disclosure claims priority to Chinese Patent Application No. 202320949101.8, filed on April 24, 2023, the disclosure of which is incorporated herein by reference in its entirety.

### TECHNICAL FIELD

The present disclosure relates to the field of batteries, and in particular, to a battery shell assembly and a lithium-ion battery.

### BACKGROUND

With the rapid growth of population and the rapid social and economic development, resources and energy are becoming increasingly scarce, and environmental protection has received more and more attention. The development and conservation of energy has become an important topic in today's world. Energy is the foundation of the existence and development of human society, and today's society based on fossil energy is encountering energy shortage and environmental pollution crisis more and more frequently.

Meanwhile, with the advent of the high-tech era of information, the application form of energy is changing, and the demand for mobile high-performance power supplies, which is renewable, pollution-free, small and discrete, is growing rapidly. As a new type of secondary battery, cylindrical lithium-ion battery has advantages such as high energy density and power density, high operating voltage, light weight, small size, long cycle life, good safety, environmental protection, and the like. It has broad application prospects in portable appliances, power tools, large-scale energy storage, electric traffic power supply, and other aspects.

In a lithium-ion battery of related arts, when the pole and the shell are riveted, insulating components such as plastic members are often used for insulation and sealingshell. When a large amount of heat is generated inside the lithium-ion battery due to an abnormality such as a short circuit, the insulating components such as plastic members may melt at high temperatures, resulting in a secondary short circuit between the pole and the shell.

### SUMMARY OF INVENTION

The present disclosure provides a battery shell assembly and a lithium-ion battery, which can solve a problem that a secondary short circuit occurs between a pole and a shell in the battery shell assembly.

For this purpose, the present disclosure adopts the following technical solutions:

In a first aspect, an embodiment of the present disclosure provides a battery shell assembly including:
a shell formed with an accommodating cavity, the accommodating cavity being configured to place a core, the shell having a first end and a second end that are opposite to each other, and the first end being provided with an opening communicating with the accommodating cavity;
a pole located at the first end of the shell, the pole being insulatively connected to the shell, and one side of the pole facing the accommodating cavity being disposed to be electrically connected with the core;
an insulating assembly connected between the pole and the shell so that the pole is insulted from the shell;
wherein the shell has a first surface opposite to the pole, the pole has a second surface opposite to the shell, and at least one of the first surface and the second surface is disposed with an insulating layer.

In a second aspect, an embodiment of the present disclosure provides a lithium-ion battery including:
the battery shell assembly according to the above;
a core located within an accommodating cavity of the battery shell assembly, wherein the core has a first electrode electrically connected to a pole of the battery shell assembly and a second electrode electrically connected to a housing of the battery shell assembly.

### ADVANTAGEOUS EFFECTS

### Advantageous effects of the present disclosure:

The present disclosure provides a battery shell assembly including a shell, a pole and an insulation assembly. The shell is formed with an accommodating cavity, and the an accommodating cavity is configured to place a core. The shell has a first end and a second end that are opposite to each other, and the first end is provided with an opening communicating with the accommodating cavity. The pole is located at the first end of the shell, and the pole is insulatively connected to the shell. One side of the pole facing the accommodating cavity is disposed to be electrically connected with the core. The insulating assembly is connected between the pole and the shell so that the pole is insulted from the shell. The shell has a first surface opposite to the pole, and the pole has a second surface opposite to the shell. At least one of the first surface and the second surface is disposed with an insulating layer. In the present disclosure, at least one of the first surface and the second surface is coated with an insulating layer, so that the pole and the shell can be separated by the insulating layer when the insulating assembly is melted at high temperatures due to short circuit of the core in the accommodating cavity, thereby avoiding the occurrence of secondary short circuit.

### DESCRIPTION OF THE DRAWINGS

FIG. 1 is a schematic structural diagram of a battery shell assembly according to an embodiment of the present disclosure;
FIG. 2 is an enlarged structural diagram of area A in FIG. 1 according to an embodiment of the present disclosure; and
FIG. 3 is a schematic structural diagram of a lithium-ion battery according to an embodiment of the present disclosure.

### List of reference numbers:

10, a lithium-ion battery;
100, battery shell assembly; 110, shell; 111, accommodating cavity; 112, first end; 113, second end; 114, opening; 115, first surface; 1151, first sub-surface; 1152, second sub-surface; 1153, third sub-surface; 120, pole; 121, slot; 122, second surface; 1221, first side; 1222, second side; 1223, bottom; 130, insulating assembly; 131, first insulating member; 132, second insulating member; 140, insulating layer;
200, core.

### EMBODIMENTS OF INVENTION

In the description of the present disclosure, unless otherwise expressly specified and limited, the terms "connected", "connecting" are to be construed in a broad sense, for example, as fixed connected, detachably connected, mechanically connected, electrically connection, directly connected or indirectly connected via an intermediary; or internally connection of two components or interaction relationship between two components. For those of ordinary skill in the art, specific meanings of the preceding terms in the present disclosure may be construed based on specific situations.

In the present disclosure, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

Embodiments of the present disclosure provide a battery shell assembly and a lithium-ion battery, which are described in detail below. It should be noted that the order in which the following embodiments are described is not intended to limit the preferred order of the embodiments.

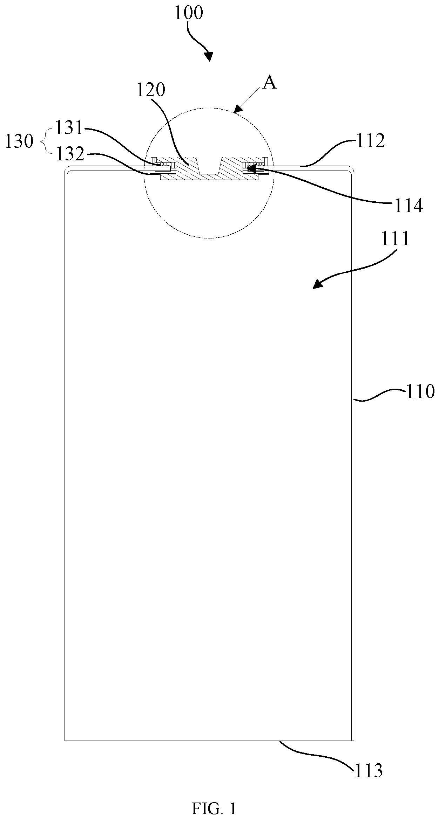

Firstly, an embodiment of the present disclosure provides a battery shell assembly and a lithium-ion battery. As shown in FIG. 1, the battery shell assembly 100 includes a shell 110, which is formed with an accommodating cavity 111 configured to place a core 200. The shell 110 has a first end 112 and a second end 113 that are opposite to each other, wherein the first end 112 is provided with an opening 114 communicating with the accommodating cavity 111. The shell 110 includes a shell main body and a cover plate, and an opening 114 is provided on the cover plate, wherein the cover plate and the shell main body are welded to form the shell 110 containing the core 200 and the electrolyte.

The battery shell assembly 100 includes a pole 120 located at a first end 112 of the shell 110, the pole 120 is insulatively connected to the shell 110, and one side of the pole 120 facing the accommodating cavity 111 is disposed to be electrically with the core 200. That is, the pole 120 serves as an output terminal of the core 200 for conducting the core 200 with an external circuit. Since the pole 120 is insulatively connected to the shell 110, if one electrode of the core 200 is electrically connected to the pole 120 and the other electrode is directly electrically connected to the shell 110, so that positive electrode and negative electrode of the core 200 are located on the same side of the battery shell assembly 100.

The battery shell assembly 100 includes an insulating assembly 130 connected between the pole 120 and the shell 110 so that the pole 120 is insulted from the shell 110. That is, when the pole 120 with the shell 110 are riveted, the insulating assembly 130 is disposed between the pole 120 and the shell 110 to realize insulation and sealing between the pole 120 and the shell 110.

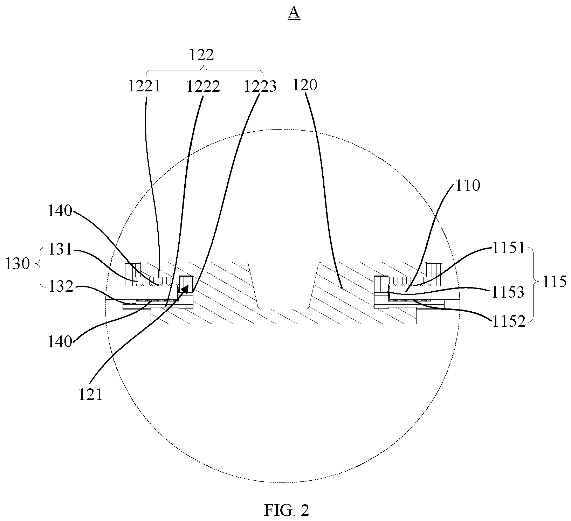

As shown in FIG. 2, the shell 110 has a first surface 115 opposite to the pole 120, the pole 120 has a second surface 122 opposite to the shell 110, and at least one of the first surface 115 and the second surface 122 is coated with an insulating layer 140. That is, the first surface 115 and the second surface 122 are surfaces of the pole 120 opposite to the shell 110. When the core 200 in the accommodating cavity 111 is short-circuited, a large amount of heat will be generated inside the core 200 and transmitted to the battery shell assembly 100, and the insulating assembly 130 in the battery shell assembly 100 may be melt at high temperatures, so that the first surface 115 and the second surface 122 directly contact with each other, which will lead to the occurrence of a secondary short circuit. By coating the insulating layer 140 on at least one of the first surface 115 and the second surface 122, when the insulating assembly 130 is melted at a high temperature, the pole 120 can still be separated from the shell 110 by the insulating layer 140, thereby avoiding the occurrence of a secondary short circuit.

In addition, the insulation layer 140 is formed on at least one of the first surface 115 and the second surface 122 by coating or spraying, so that the insulation layer 140 is more closely connected to the first surface 115 and/or the second surface 122, and the addition of new liquid leakage channels can be avoided while insulating, thereby reducing the risk of liquid leakage of the battery shell assembly 100.

It should be noted that the insulating layer 140 in embodiments of the present disclosure is a high-temperature-resistant insulating layer 140. That is, the insulating layer 140 can still still maintain a stable structure even in the case where the insulating assembly 130 is melted, which further play a role of isolating the pole 120 from the shell 110.

The battery shell assembly 100 in embodiments of the present disclosure includes a shell 110, a pole 120 and an insulating assembly 130. The shell 110 is formed with an accommodating cavity 111 which is configured to place a core 200. The shell 110 has a first end 112 and a second end 113 that are opposite to each other, wherein the first end 112 is provided with an opening 114 communicating with the accommodating cavity 111. The pole 120 is located at the first end 112 of the shell 110. The pole 120 is insulatively connected to the shell 110, and one side of the pole 120 facing the accommodating cavity 111 is disposed to be electrically connected with the core 200. The insulating assembly 130 is connected between the pole 120 and the shell 110, so that the pole 120 is insulatively connected to the shell 110. The shell 110 has a first surface 115 opposite to the pole 120, the pole 120 has a second surface 122 opposite to the shell 110, and at least one of the first surface 115 and the second surface 122 is coated with an insulating layer 140. In the present disclosure, by coating the insulating layer 140 on at least one of the first surface 115 and the second surface 122, the pole 120 and the shell 110 can be separated by the insulating layer 140 when the insulating assembly 130 is melted at a high temperature due to the short circuit of the core 200 in the accommodating cavity 111, thereby avoiding the occurrence of a secondary short circuit.

In some embodiments, both the first surface 115 and the second surface 122 are coated with the insulating layer 140, so that when the insulating assembly 130 is melted at a high temperature due to the short circuit of the core 200 in the accommodating cavity 111, the pole 120 and the shell 110 can be separated by two insulating layers 140 to further reduce the risk of the occurrence of a secondary short circuit.

Optionally, the pole 120 partially extends into the accommodating cavity 111, so as to facilitate connection between the pole 120 and the core 200 in the accommodating cavity 111. A side surface of the pole 120 is provided with a slot 121, and the slot 121 extends continuously along a circumferential direction of the opening 114. An edge of the opening 114 of the shell 110 extends into the slot 121 and is insulatively connected to the pole 120 by the insulating assembly 130. That is, the pole 120 is riveted to the shell 110 by providing the slot 121 on one side, and the pole 120 is separated from the shell 110 through the insulating assembly 130.

The slot 121 has a first side 1221, a second side 1222, and a bottom 1223. The first side 1221, the second side 1222, and the bottom 1223 constitute the second surface 122 of the pole 120 opposite to the shell 110. The shell 110 has a first sub-surface 1151 corresponding to the first side 1221, a second sub-surface 1152 corresponding to the second side 1222, and a third sub-surface 1153 corresponding to the bottom 1223. The first sub-surface 1151, the second sub-surface 1152, and the third sub-surface 1153 constitute the first surface 115 of the shell 110 opposite to the pole 120.

In some embodiments, at least the first sub-surface 1151 in the first surface 115 is coated with the insulating layer 140, wherein the first sub-surface 1151 is a part of an outer surface of the shell 110. When the insulating assembly 130 is melt at a high temperature, support between the pole 120 and the shell 110 will be lost, and the pole 120 will move in a direction close to the shell 110 under the action of gravity, so that the first side 1221 of the slot 121 on the pole 120 can easily contact with the first sub-surface 1151 of the shell 110. By coating the insulating layer 140 on the first sub-surface 1151 of the first surface 115, it is helpful to prevent the first side surface 1221 of the pole 120 from directly contacting the first sub-surface 1151 under the action of gravity when the insulating assembly 130 is melted, thereby reducing the risk of a secondary short circuit.

Similarly, in other embodiments, at least the first side 1221 of the second surface 122 is coated with the insulating layer 140, wherein the first side 1221 is a part of the second surface 122 facing the outer surface of the shell 110. When the insulating assembly 130 is melt at a high temperature, support between the pole 120 and the shell 110 will be lost, and the pole 120 will move in a direction close to the shell 110 under the action of gravity, so that the first side 1221 of the slot 121 on the pole 120 can easily contact with the first sub-surface 1151 of the shell 110. By coating the insulating layer 140 on the first side 1221 of the second surface 122, it is helpful to prevent the first side surface 1221 of the pole 120 from directly contacting the first sub-surface 1151 under the action of gravity when the insulating assembly 130 is melted, thereby reducing the risk of a secondary short circuit.

In other embodiments, each of the first side 1221, the second side 1222, and the bottom 1223 is coated with the insulating layer 140. That is, the entire second surface 122 of the pole 120 opposite to the shell 110 is coated with the insulating layer 140, so that direct contact between the pole 120 and the shell 110 can be avoided regardless of the direction in which the pole 120 approaches the shell 110 when the insulating assembly 130 is melt at a high temperature, thereby reducing the risk of a secondary short circuit.

Similarly, in still other embodiments, each of the first sub-surface 1151, the second sub-surface 1152, and the third sub-surface 1153 is coated with the insulating layer 140. That is, the entire first surface 115 of the shell 110 opposite to the pole 120 is coated with the insulating layer 140, so that direct contact between the pole 120 and the shell 110 can be avoided regardless of the direction in which the pole 120 approaches the shell 110 when the insulating assembly 130 is melt at a high temperature, thereby reducing the risk of a secondary short circuit.

Optionally, the insulating layer 140 on the first sub-surface 1151 extends from the edge of the opening 114 in a direction away from the opening 114 and extends out of the slot 121. That is, one side of the insulating layer 140 on the first sub-surface 1151 away from the opening 114 extends out of the side of the pole 120. This structural design makes it possible for the insulating layer 140 on the first sub-surface 1151 to separate the pole 120 from the shell 110 even if the pole 120 is displaced in the left-right direction relative to the shell 110 when the insulating assembly 130 is melted, so as to reduce the risk of a secondary short circuit.

In some embodiments, the insulating layer 140 on the second sub-surface 1152 extends from the edge of the opening 114 in a direction away from the opening 114 and extends out of the slot 121. That is, one side of the insulating layer 140 on the second sub-surface 1152 away from the opening 114 extends out of the side of the pole 120. This structural design makes it possible for the insulating layer 140 on the second sub-surface 1152 to separate the pole 120 from the shell 110 even if the pole 120 shakes upward relative to the shell 220 and is displaced in the left-right direction relative to the shell 110 when the insulating assembly 130 is melted, so as to reduce the risk of a secondary short circuit

It should be noted that the coating position of the insulating layer 140 on the first surface 115 and the second surface 122 can be adjusted according to the specific contact manner of the pole 120 and the shell 110 and the actual use requirement when the insulating assembly 130 is melted, as long as the coating of the insulating layer 140 can effectively reduce the risk of a secondary short circuit, which is not particularly limited herein.

Optionally, the insulating assembly 130 includes a first insulating member 131 and a second insulating member 132. The first insulating member 131 is disposed between the first side 1221 and the first sub-surface 1151, and the second insulating member 132 is located between the second side 1222 and the second sub-surface 1152, so that the pole 120 is insulted from the shell 110.

In some embodiments, the first insulating member 131 extends along the first sub-surface 1151 to the third sub-surface 1153. That is, the cross section of the first insulating member 131 is L-shaped, so that the pole 120 and the shell 110 can be insulated, which also play a role of sealing.

In other embodiments, the second insulating member 132 extends along the second sub-surface 1152 to the third sub-surface 1153. That is, the cross section of the second insulating member 132 is L-shaped, so that the pole 120 and the shell 110 can be insulated, which also play a role of sealing.

In still other embodiments, the first insulating member 131 extends along the first sub-surface 1151 to the third sub-surface 1153, meanwhile the second insulating member 132 extends along the second sub-surface 1152 to the third sub-surface 1153. That is, the cross sections of both the first insulating member 131 and the second insulating member 132 are L-shaped, so that the first insulating member 131 and the second insulating member 132 can abut against each other. Correspondingly, the whole insulating layer 140 coated on the first surface 115 or the second surface 122 can be considered as a C-type structure formed by connecting two L-shaped structures.

It should be noted that the specific structures of the first insulating member 131 and the second insulating member 132 can be adjusted according to actual design requirements, as long as the first insulating member 131 and the second insulating member 132 can insulate the pole 120 and the shell 110 while still playing a role of sealing, which is not particularly limited herein.

In some embodiments, the insulating layer 140 has a thickness of greater than or equal to 0.05 mm and less than or equal to 0.1 mm. If the thickness of the insulating layer 140 is too small, the insulating layer 140 may not play an effective insulating role after the insulating assembly 130 is melted at a high temperature. If the thickness of the insulating layer 140 is too large, it may affect the sealing effect of the first insulating member 131 and the second insulating member 132 on the pole 120 and the shell 110.

Specifically, in the actual manufacturing process, the thickness of the insulating layer 140 can be set to 0.05 mm, 0.06mm, 0.08mm, 0.1 mm, or the like, and the specific value can be adjusted according to actual use requirements, so long as the insulating layer 140 can effectively insulate without affecting the sealing effect of the first insulating member 131 and the second insulating member 132 on the pole 120 and the shell 110, which is not particularly limited herein.

In other embodiments, the insulating layer 140 can be a high-temperature-resistant insulating material, such as a ceramic layer or a mica sheet layer, so that the insulating layer 140 does not deform at a high temperature of 500 °C and still has a good insulating property, so as to ensure that the insulating layer 140 can still play the role of isolating the pole 120 from the shell 110 when the insulating assembly 130 is melted at a high temperature, thereby reducing the risk of a secondary short circuit.

Secondly, embodiments of the present disclosure further provide a lithium-ion battery including a battery shell assembly, and a specific structure of the battery shell assembly is described with reference to the foregoing embodiments. Since the lithium-ion battery adopts all the technical solutions of all the foregoing embodiments, it has at least all the beneficial effects brought by the technical solutions of the foregoing embodiments, which will not be repeated herein.

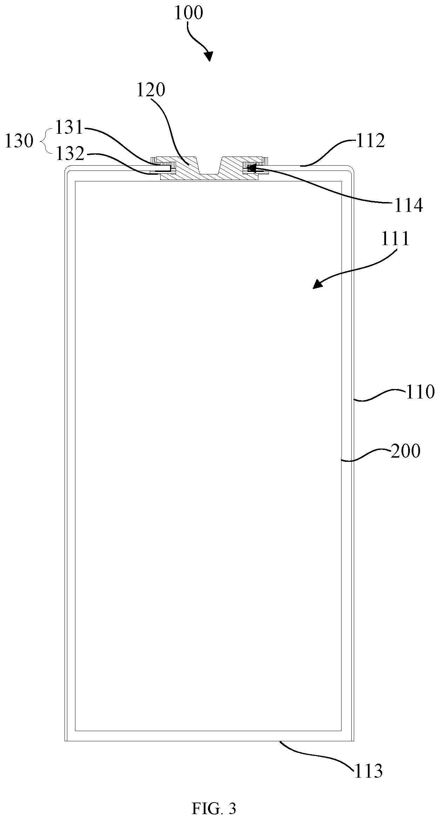

As shown in FIG. 3, the lithium-ion battery 10 includes a battery shell assembly 100 and a core 200 located in an accommodating cavity 111 of the battery shell assembly 100. The core 200 has a first electrode and a second electrode. The first electrode is electrically connected to the pole 120 of the battery shell assembly 100, and the second electrode electrically connected to the shell 110 of the battery shell assembly 100. That is, the pole 120 and the entire shell 110 are respectively used as two output terminals of the lithium-ion battery 10, so that positive electrode and negative electrode of the core 200 are located on the same side of the battery shell assembly 100, which is convenient for the assembly of subsequent modules.

The first electrode can be a positive electrode of the core 200, and the second electrode can be a negative electrode of the core 200, so the pole 120 in the battery shell assembly 100 is the positive output terminal of the lithium-ion battery 10. Correspondingly, the shell 110 is the negative output terminal of the lithium-ion battery 10.

Specifically, the battery shell assembly 100 in embodiments of the present disclosure includes a shell 110, a pole 120 and an insulating assembly 130. The shell 110 is formed with an accommodating cavity 111 configured to place a core 200. The shell 110 has a first end 112 and a second end 113 that are opposite to each other. The first end 112 is provided with an opening 114 communicating with the accommodating cavity 111. The pole 120 is disposed at the first end 112 of the shell 110. The pole 120 is insulatively connected to the shell 110, and one side of the pole 120 facing the accommodating cavity 111 is disposed to be electrically connected with the core 200. The insulating assembly 130 is connected between the pole 120 and the shell 110 to insulatively connect the pole 120 to the shell 110. The shell 110 has a first surface 115 opposite to the pole 120, the pole 120 has a second surface 122 opposite to the shell 110, and at least one of the first surface 115 and the second surface 122 is coated with an insulating layer 140. In the present disclosure, at least one of the first surface 115 and the second surface 122 is coated with the insulating layer 140, so that the pole 120 and the shell 110 can be separated by the insulating layer 140 when the insulating assembly 130 is melted at a high temperature due to short circuit of the core 200 in the accommodating cavity 111, thereby avoiding the occurrence of a secondary short circuit.

In addition, the insulation layer 140 is formed on at least one of the first surface 115 and the second surface 122 by coating or spraying, so that the insulation layer 140 is more closely connected to the first surface 115 and/or the second surface 122, and the addition of new liquid leakage channels can be avoided while insulating, thereby reducing the risk of liquid leakage of the battery shell assembly 100.

## Claims

1. A battery shell assembly (100) comprising:
a shell (110) formed with an accommodating cavity (111), the accommodating cavity (111) being configured to place a core (200), the shell (110) having a first end (112) and a second end (113) that are opposite to each other, and the first end (112) being provided with an opening (114) communicating with the accommodating cavity (111);
a pole (120) disposed at the first end (112) of the shell (110), the pole (120) being insulatively connected to the shell (110), and one side of the pole (120) facing the accommodating cavity (111) being disposed to be electrically connected with the core (200); and
an insulating assembly (130) connected between the pole (120) and the shell (110) so that the pole (120) is insulted from the shell (110);
wherein the shell (110) has a first surface (115) opposite to the pole (120), the pole (120) has a second surface (122) opposite to the shell (110), and at least one of the first surface (115) and the second surface (122) is disposed with an insulating layer (140).

2. The battery shell assembly (100) according to claim 1, wherein both the first surface (115) and the second surface (122) are disposed with an insulating layer (140).

3. The battery shell assembly (100) according to claim 1, wherein the pole (120) partially extends into the accommodating cavity (111), a side surface of the pole (120) is provided with a slot (121), the slot (121) extends continuously along a circumferential direction of the opening (114), and an edge of the opening (114) of the shell (110) extends into the slot (121) and is insulatively connected to the pole (120) by the insulating assembly (130).

4. The battery shell assembly (100) according to claim 3, wherein the slot (121) has a first side (1221), a second side (1222) and a bottom (1223), and the first side (1221), the second side (1222) and the bottom (1223) constitutes the second surface (122);
the shell (110) has a first sub-surface (1151) corresponding to the first side (1221), a second sub-surface (1152) corresponding to the second side (1222), and a third sub-surface (1153) corresponding to the bottom (1223), and the first sub-surface (1151), the second sub-surface (1152), and the third sub-surface (1153) constitutes the first surface (115);
at least the first sub-surface (1151) of the first surface (115) is disposed with the insulating layer (140); and/or
at least the first side (1221) of the second surface (122) is disposed with the insulating layer (140).

5. The battery shell assembly (100) according to claim 4, wherein each of the first side (1221), the second side (1222) and the bottom (1223) is disposed with the insulating layer (140).

6. The battery shell assembly (100) according to claim 4, wherein each of the first sub-surface (1151), the second sub-surface (1152) and the third sub-surface (1153) is disposed with the insulating layer (140).

7. The battery shell assembly (100) according to claim 4, wherein each of the first side (1221), the second side (1222) and the bottom (1223) is disposed with the insulating layer (140); and each of the first sub-surface (1151), the second sub-surface (1152) and the third sub-surface (1153) is disposed with the insulating layer (140).

8. The battery shell assembly (100) according to any one of claims 4 to 7, wherein the insulating layer (140) on the first sub-surface (1151) extends from the edge of the opening (114) in a direction away from the opening (114) and extends out of the slot (121).

9. The battery shell assembly (100) according to any one of claims 4 to 7, wherein the insulating layer (140) on the second sub-surface (1152) extends from the edge of the opening (114) in a direction away from the opening (114) and extends out of the slot (121).

10. The battery shell assembly (100) according to any one of claims 4 to 7, wherein the insulating layer (140) on the first sub-surface (1151) extends from the edge of the opening (114) in a direction away from the opening (114) and protrudes from the slot (121); and the insulating layer (140) on the second sub-surface (1152) extends from the edge of the opening (114) in a direction away from the opening (114) and extends out of the slot (121).

11. The battery shell assembly (100) according to any one of claims 4 to 7, wherein the insulating assembly (130) comprises a first insulating member (131) and a second insulating member (132), wherein the first insulating member (131) is disposed between the first side (1221) and the first sub-surface (1151) and the second insulating member (132) is disposed between the second side (1222) and the second sub-surface (1152);
the first insulating member (131) extends along the first sub-surface (1151) to the third sub-surface (1153); and/or
the second insulating member (132) extends along the second sub-surface (1152) to the third sub-surface (1153).

12. The battery shell assembly (100) according to any one of claims 1 to 7, wherein the insulating layer (140) has a thickness of greater than or equal to 0.05 mm and less than or equal to 0.1 mm.

13. The battery shell assembly (100) according to any one of claims 1 to 7, wherein the insulating layer (140) is a ceramic layer or a mica sheet layer.

14. The battery shell assembly (100) according to claim 11, wherein the first insulating member (131) and the second insulating member (132) abut against each other.

15. A lithium-ion battery (10) comprising:
the battery shell assembly (110) according to any one of claims 1 to 14; and
a core (200) disposed within an accommodating cavity (111) of the battery shell assembly (100), wherein the core (200) has a first electrode electrically connected to a pole (120) of the battery shell assembly (100); and a second electrode electrically connected to a shell (110) of the battery shell assembly (100).
